# EUROPEAN PATENT SPECIFICATION

(11) **EP 2 880 884 B1**
(45) Date of publication and mention of the grant of the patent: **16.10.2019**
(21) Application number: 13744565.6
(22) Date of filing: 01.08.2013
(51) Int. Cl.: H04W 8/08

(54) **ENHANCED RADIO RESOURCE MANAGEMENT**
VERBESSERTES FUNKRESSOURCENMANAGEMENT
AMÉLIORATION DE LA GESTION DE RESSOURCES RADIO

(30) Priority: 02.08.2012 EP 12179004
(43) Date of publication of application: 10.06.2015
(73) Proprietor: Deutsche Telekom AG, 53113 Bonn (DE)
(72) Inventor: SCHULZ, Mario, 04643 Geithain (DE); SCHMITT, Harald, 56170 Bendorf (DE); MAURER, Jürgen, 53474 Bad Neuenahr-Ahrweiler (DE); LEHSER, Frank, 53175 Bonn (DE)
(74) Representative: Schwöbel, Thilo K.
(86) International application number: PCT/EP2013/066226
(87) International publication number: WO 2014/020127

(56) References cited:
- EP-A1- 2 239 987
- WO-A1-2009/058069
- WO-A1-2009/141001
- WO-A1-2011/123744
- US-A1- 2003 129 995
- US-A1- 2008 220 782

## Description

### BACKGROUND

The present invention relates a method for enhanced radio resource management in a public land mobile network.

The present invention further relates to a user equipment for enhance radio resource management in a public land mobile network.

Currently, the setting of the mobility parameters are based on the serving frequency, the target frequency as well as on the speed of movement of the user equipment (or on the velocity the user equipment is travelling). Thereby, the speed (or the velocity) of the user equipment is currently only determined by the frequency of radio cell reselection.

In idle-mode, the user equipment measures its mobility status (high, normal or low speed user equipment) based on the radio cell reselection frequency. Pre-defined scaling factors are applied to mobility parameters dependent on the mobility status of the user equipment.

Within active mode of the user equipment, the public land mobile network measures the mobility also based on radio cell changes. The public land mobile network uses this information for radio resource management purposes, e.g. forces a fast moving user equipment (high mobility mode) to change to a lower frequency, and vice versa.

By switching back to idle mode, the public land mobile network will report the used mobility mode to the user equipment and the user equipment will maintain the mobility status as described.

Measuring the mobility of user equipments within the public land mobile network only via radio cell reselection or radio cell change frequency (i.e. handover frequency between network cells) has, e.g., the following limitations and drawbacks:
-- the mobility within a radio cell (and especially the change of the mobility status of a user equipment within a radio cell) is not covered,
-- only a very rough or imprecise estimation of the real mobility situation of a user equipment (i.e. especially the speed of a user equipment) is possible, as well as
-- the current determination of the mobility of a user equipment (especially the speed of a user equipment) either not useful or not meaningful in low frequency ranges due to the big coverage area of a single radio cell.

In current public land mobile networks of the second, third and fourth generation (GERAN, UTRAN, eUTRAN) as well as in other radio access technologies, the network is broadcasting scaling factors for up to three different user equipment mobility modes (i.e. high speed user equipment, normal speed user equipment and low speed user equipment). Depending on the measured mode, the user equipment is using different parameter settings of the mobility parameters or to define the mobility parameters. Due to the fact that the mobility information (i.e. especially predicting the speed or the velocity of the user equipment), measured in terms of the frequency of the radio cell reselection, gives only a rough estimation of the actual speed or the velocity of the user equipment, the used settings of the mobility parameters are often inappropriate for an important number of user equipments within the public land mobile network. Hence misallocations of radio resources of the public land mobile network result with respect to an important number of user equipments within the public land mobile network, i.e. currently comparably slow moving user equipments (that previously moved with a higher speed and hence are categorized "high speed user equipments") are assigned to corresponding mobility parameters, especially lower frequencies and the like, whereas currently comparably fast moving user equipments (that previously moved with a lower speed and hence are categorized "low speed user equipments") are assigned to corresponding mobility parameters, especially higher frequencies and the like. International Application WO 2009/058069 A1 discloses that a UE 10 measures its speed SPEED-UE at step 2, and that the UE then reports SPEED-UE to a serving BS 12 at step 3, whereby the reporting can be done either periodically, or in an event-triggered manner, e.g., when the UE 10 speed has changed by N km/h in comparison to its previous speed.

### SUMMARY

An object of the present invention is to provide for an enhanced radio resource management by means of a better or optimized allocation of radio resources within the public land mobile network dependent on the different speeds of the user equipments within the public land mobile network.

The object of the present invention is achieved by a method for enhanced radio resource management in a public land mobile network as set out by claim 1.

It is thereby advantageously possible according to the present invention that an optimized behaviour and an optimized management of available radio resources of the public land mobile network can be realized. Additionally, such an optimized behaviour is possible to realize without additional components or devices within widely used user equipments as such components or such mobility detecting sensor modules are typically already present in a multitude of user equipments.

According to the present invention, it is advantageously possible that a more precise determination of the current movement situation of a user equipment is possible to obtain and thus a more adequate allocation of the radio resources available in the public land mobile network among typically the multitude of different user equipments. Based on the measurements of the mobility detecting sensor module, the user equipment can calculate the mobility status or even the real speed more precisely, especially while being within a single radio cell. This information is provided to the network, i.e. to the public land mobile network, in both idle and active mode with a high granularity (i.e. with a fine granularity), e.g. using velocity ranges of the form:
-- static / unmoved,
-- below 5 km/h,
-- between 5 km/h and 10 km/h,
-- between 10 km/h and 20 km/h,
-- between 20 km/h and 40 km/h,
-- between 40 km/h and 60 km/h,
-- between 60 km/h and 80 km/h,
-- between 80 km/h and 100 km/h,
-- above 100 km/h.
With such mobility modes having a fine granularity with respect to the velocity or speed of the user equipment, it is possible to optimize the use of available radio resources of the public land mobile network such that more parameter sets (one per mobility mode) are broadcast by the (base transceiver stations of the access network of the) public land mobile network. Due to the higher (i.e. finer) granularity of the velocity ranges or mobility modes, the mobility parameter sets are more precise (which is especially relevant in connected mode of the user equipment). In connected mode, the accurate user equipment speed (as measured by the mobility detecting sensor module) is used by the user equipment to optimize the radio resource management (e.g. the preferred frequency layer, optimized mobility parameters, the early detection of potential handover, etc.).

It is advantageous according to the present invention, that by knowing better/optimized parameter sets (better adapted to the precise current motion state of the user equipment) already in idle mode, the user equipment camping on the public land mobile network is able to use such optimized parameters for the cell reselection process. Furthermore, in idle mode, the user equipment can use the more optimized parameters to reduce battery power consumption for static or slow moving user equipments.
In active mode, the public land mobile network can use the more accurate indications about the speed or velocity of the user equipment to optimize handover procedures and to adapt radio resource parameters (e.g. by an optimization of the target cell selection process by using a preferred frequency range for specific speed ranges of the user equipment).

According to the present invention, it is both possible to know more precisely the current movement situation (especially the speed or the velocity) of a user equipment in terms of either a precise (horizontal scalar) velocity or in terms of comparably narrow (horizontal scalar) velocity ranges, and it is furthermore as well possible to know the (comparably precise horizontal scalar) velocity or the narrow (horizontal scalar) velocity range with a good resolution in time, i.e. in case of a change of the horizontal scalar velocity (i.e. in case of either an acceleration or a deceleration) of a user equipment, this event is rapidly detectable and it is advantageously possible according to the present invention to adapt the radio resource management accordingly. E.g. in case that a user equipment has been used in a stationary manner during a first time interval and is, e.g., moved with a vehicle at a certain speed of, e.g., 80 km/h, during a second time interval (the second time interval being, e.g., immediately after the first time interval), it is advantageously possible according to the present invention to know about such a situation early and to adapt the distribution of radio resources of the public land mobile network accordingly in order to increase the overall service level within the public land mobile network. Likewise, in case that a user equipment is, e.g., moved with a vehicle at a certain speed of, e.g., 80 km/h, during a first time interval and is used in a stationary manner during a second time interval (the second time interval being, e.g., immediately after the first time interval), it is advantageously possible according to the present invention to know about such a situation early and to adapt the distribution of radio resources of the public land mobile network accordingly in order to increase the overall service level within the public land mobile network.

However, the present invention does not aim at tracking certain or all user equipments. Therefore, the information to be transmitted, by the user equipment, to the public land mobile network has to be sufficiently precise to allow the public land mobile network to allocate the available radio resources in an optimized manner but the information to be transmitted should not be sufficient to track or precisely located the user equipment.

Additionally, it is advantageously possible according to the present invention that an estimation of the mobility situation of such user equipments is possible to obtain that are not transmitting the mobility status update information to the public land mobile network (e.g. because the relevant functionality, and especially the mobility detecting sensor module, is not present at the user equipment). This is possible, for example, by relating information pattern, e.g. signal strength information pattern, of user equipments that transmit mobility status update information and of user equipments that do not transmit mobility status update information.

According to a preferred embodiment of the present invention, the mobility status update information is transmitted at least in case of a discrepancy exceeding a predetermined threshold between the current motion information and the previous motion information.

Thereby, it is advantageously possible to limit the additional signalization transmission related to the transmission of the mobility status update information to such situations where the current motion information and the previous motion information differ significantly, i.e. by more than a predetermined threshold.

According to a further preferred embodiment of the present invention, the mobility status update information is transmitted at least once during a predetermined time interval.

Thereby, it is advantageously possible that the public land mobile network receives regularly the mobility status update information from the user equipment such that a precise and updated information about the mobility situation of the user equipment is possible.

According to a further preferred embodiment of the present invention, a mobility status information is assigned, by the public land mobile network, to the user equipment, wherein the mobility status information, assigned to the user equipment, is dependent on at least one network usage information of the user equipment related to an elapsed time interval,
wherein the mobility status information is modified dependent on the mobility status update information received from the user equipment.

Thereby, it is advantageously possible to modify and adjust, based on real-time information or based at least one near-time information, the mobility status information related to the user equipment which is present in the public land mobile network.

According to the present invention, it is furthermore preferred that the motion information corresponds to one of a number of predetermined ranges of scalar horizontal velocities of the user equipment.

Thereby, it is advantageously possible according to the present invention that without requiring the transmission of the mobility status update information in the form of a velocity or speed value, a comparably precise indication about the current velocity of the user equipment can be transmitted, namely by defining a certain number of velocity ranges, e.g. five ranges or six ranges or seven ranges or eight ranges, such that a precise indication about the movement of the user equipment can be transmitted without the need to transmit the measured value of the velocity.

According to still a further preferred embodiment of the present invention, the current motion information comprises a current horizontal direction of movement information related to a current point in time or a current time interval, wherein the previous motion information comprises a previous horizontal direction of movement information related to a previous point in time or a previous time interval.

Thereby, it is advantageously possible according to the present invention that not only the (scalar) value of the (horizontal) velocity of the user equipment can be taken into consideration, but also the direction of the this movement of the user equipment. Thereby, it is advantageously possible according to the present invention that a better estimation is possible whether the user equipment, moving at a certain velocity within a certain velocity range, is still to traverse a given radio cell or not.

Furthermore, it is preferred according to the present invention that, in view of an optimization of the energy consumption of the user equipment, a radio resource management procedure of the user equipment triggers measurements regarding the radio environment of the user equipment, measurement periodicity parameters of such measurements being defined within parameter ranges of the radio resource management procedure of the user equipment, wherein the parameter ranges are adapted dependent on the current motion information, wherein the parameter ranges are preferably provided by the public land mobile network.

Thereby, it is advantageously possible according to the present invention that battery drainage of the user equipment can be reduced by adapting the radio resource management procedure of the user equipment in such a manner that, e.g. measurements regarding the radio environment of the user equipment are performed less often in case that the current motion information indicates that the user equipment is moving slowly or not at all.

Furthermore, the present invention relates to a user equipment for enhanced radio resource management in a public land mobile network comprising at least the user equipment, wherein the user equipment comprises a mobility detecting sensor module and a memory means, wherein the mobility detecting sensor module is configured to generate a previous motion information and a current motion information, the current motion information being indicative of a current horizontal scalar acceleration value and/or of a current horizontal scalar velocity of the user equipment related to a current point in time or a current time interval, the previous motion information being stored in the memory means and indicative of a previous horizontal scalar acceleration value and/or of a previous horizontal scalar velocity of the user equipment related to a previous point in time or a previous time interval, wherein the previous point in time is prior to the current point in time or wherein the previous time interval is prior to the current time interval, wherein the user equipment is configured such that a mobility status update information, indicative of the current motion information, is able to be transmitted by the user equipment to the public land mobile network, wherein the user equipment is configured such that the mobility status update information is transmitted to the public land mobile network at least in case of a discrepancy between the current motion information and the previous motion information.

According to a further alternative, the present invention relates to a user equipment for enhanced radio resource management in a public land mobile network

The user equipment according to the present invention is advantageously enabled to transmit the mobility status update information to indicate its current motion situation.

It is furthermore preferred according to the present invention - also with respect to the user equipment - that the user equipment is configured such that the mobility status update information is transmitted at least in case of a discrepancy exceeding a predetermined threshold between the current motion information and the previous motion information.

According to further preferred embodiments of the present invention - also with respect to the user equipment - it is preferred that the current motion information comprises a current horizontal direction of movement information related to a current point in time or a current time interval, wherein the previous motion information comprises a previous horizontal direction of movement information related to a previous point in time or a previous time interval.

It is furthermore preferred according to the present invention that the mobility detecting sensor module comprises at least one out of the following:
-- an acceleration sensor and/or
-- a GSPS (Global Satellite Positioning System) receiver and/or
-- signal strength sensor of RF signals of a base transceiver station of the public land mobile network and/or
-- a digital compass and/or
-- a gyroscope and/or
-- a proximity sensor and/or
-- an ambient light sensor.

Thereby, it is advantageously possible according to the present invention that the current motion situation can be determined using different devices or modules and different sensor principles.

Furthermore, it is preferred according to the present invention - also with respect to the user equipment - that, in view of an optimization of the energy consumption of the user equipment, a radio resource management procedure of the user equipment triggers measurements regarding the radio environment of the user equipment, measurement periodicity parameters of such measurements being defined within parameter ranges of the radio resource management procedure of the user equipment, wherein the parameter ranges are adapted dependent on the current motion information, wherein the parameter ranges are preferably provided by the public land mobile network.

Additionally, the present invention relates to a program comprising a computer readable program code which, when executed on a computer or on a user equipment, causes the computer or the user equipment to perform the inventive method.

Still additionally, the present invention relates to computer program product for using a user equipment, the computer program product comprising a computer program stored on a storage medium, the computer program comprising program code which, when executed on a computer or on the user equipment, causes the computer or the user equipment to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

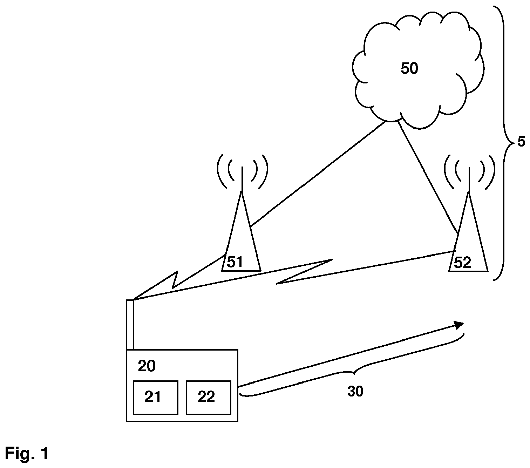

Figure 1 schematically illustrates a user equipment camping on a public land mobile network and moving within the coverage area of the public land mobile network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a public land mobile network 5 comprising a core network 50 and an access network is schematically shown. The core network 50 is only schematically shown by means of a cloud representation. The public land mobile network 5 (especially the core network 50) comprises typically various network elements such as an MSC (Mobile Switching Center), a SGSN (Serving GPRS Support Node), a MME (Mobility Management Entity), preferably a plurality of network elements thereof. The access network comprises a plurality of base transceiver stations. Only a first base transceiver station 51 and a second base transceiver station 52 are shown in Figure 1.

A user equipment 20 camps on the public land mobile network, i.e. the user equipment 20 is in an idle state or in a connected state and linked to the public land mobile network. The user equipment 20 moves according to a velocity vector indicated with reference sign 30 in Figure 1. The velocity vector is defined by
-- a scalar information related to the absolute value of the velocity or speed of the user equipment 20 relative to the base transceiver stations 51, 52 of the public land mobile network 5 (i.e. relative to the surface of the earth which is at least roughly horizontal), and
-- an information related to the current direction of travel of the user equipment 20 relative to the base transceiver stations 51, 52.

According to the present invention, the user equipment 20 comprises a mobility detecting sensor module 51 and a memory means 52. The mobility detecting sensor module 51 detects at least the scalar information related to the absolute value of the velocity or speed of the user equipment 20 relative to the base transceiver stations 51, 52. A typical example would be an acceleration sensor within the mobility detecting sensor module such that the mobility detecting sensor module is able to integrate measured acceleration signals in a manner to obtain a velocity or speed value. The mobility detecting sensor module 51 provides updated measurement values of the (scalar horizontal) speed or velocity of the user equipment 20 typically in regular time intervals of, e.g., fractions of a second or every three to 30 seconds. Previous values of the (scalar horizontal) speed or velocity of the user equipment 20 are stored in the memory means 52 of the user equipment 20. According to the present invention, the stored values (or at least a part thereof, or an average thereof) of the (scalar horizontal) speed or velocity of the user equipment 20 correspond to or are converted to a previous motion information of the user equipment 20. The current values (or at least a part thereof, or an average thereof) of the (scalar horizontal) speed or velocity of the user equipment 20 correspond to or are converted to a current motion information of the user equipment 20. Thereby, the current motion information is indicative of the current horizontal scalar velocity of the user equipment 20 (or of a current scalar horizontal acceleration value of the user equipment 20) related to a current point in time or a current time interval. Likewise, the previous motion information (stored in the memory means 52) is indicative of a previous horizontal scalar velocity of the user equipment 20 (or of a previous scalar horizontal acceleration value of the user equipment 20) related to a previous point in time or a previous time interval.

Furthermore according to the present invention, a mobility status update information, indicative of the current motion information, can be transmitted by the user equipment 20 to the public land mobile network 5, and it is transmitted at least in case of a discrepancy between the current motion information and the previous motion information, i.e. in case that the velocity or the speed of the user equipment 20 has sufficiently changed.

## Claims

1. Method for enhanced radio resource management in a public land mobile network (5) comprising at least one user equipment (20),
wherein the user equipment (20) comprises a mobility detecting sensor module (51) and a memory means (52),
wherein the mobility detecting sensor module (51) generates a previous motion information and a current motion information,
the current motion information being indicative of a current horizontal scalar acceleration value and/or of a current horizontal scalar velocity of the user equipment (20) related to a current point in time or a current time interval,
the previous motion information being stored in the memory means (52) and indicative of a previous horizontal scalar acceleration value and/or of a previous horizontal scalar velocity of the user equipment (20) related to a previous point in time or a previous time interval,
wherein the previous point in time is prior to the current point in time or wherein the previous time interval is prior to the current time interval,
wherein a mobility status update information, indicative of the current motion information, is able to be transmitted by the user equipment (20) to the public land mobile network (5),
wherein the mobility status update information is transmitted, by the user equipment (20), to the public land mobile network (5) at least in case of a discrepancy between the current motion information and the previous motion information,
wherein the mobility status update information is transmitted at least in case of a discrepancy exceeding a predetermined threshold between the current motion information and the previous motion information,
wherein the mobility status update information is transmitted at least once during a predetermined time interval, such that the mobility status update information is received at least regularly by the public land mobile network from the user equipment.

2. Method according to one of the preceding claims, wherein a mobility status information is assigned, by the public land mobile network (5), to the user equipment (20), wherein the mobility status information, assigned to the user equipment (20), is dependent on at least one network usage information of the user equipment (20) related to an elapsed time interval,
wherein the mobility status information is modified dependent on the mobility status update information received from the user equipment (20).

3. Method according to one of the preceding claims, wherein the motion information corresponds to one of a number of predetermined ranges of scalar horizontal velocities of the user equipment (20).

4. Method according to one of the preceding claims, wherein the current motion information comprises a current horizontal direction of movement information related to a current point in time or a current time interval, wherein the previous motion information comprises a previous horizontal direction of movement information related to a previous point in time or a previous time interval.

5. Method according to one of the preceding claims, wherein, in view of an optimization of the energy consumption of the user equipment (20), a radio resource management procedure of the user equipment (20) triggers measurements regarding the radio environment of the user equipment (20), measurement periodicity parameters of such measurements being defined within parameter ranges of the radio resource management procedure of the user equipment (20), wherein the parameter ranges are adapted dependent on the current motion information, wherein the parameter ranges are preferably provided by the public land mobile network (5).

6. User equipment (20) for enhanced radio resource management in a public land mobile network (5) comprising at least the user equipment (20),
wherein the user equipment (20) comprises a mobility detecting sensor module (51) and a memory means (52),
wherein the mobility detecting sensor module (51) is configured to generate a previous motion information and a current motion information,
the current motion information being indicative of a current horizontal scalar acceleration value and/or of a current horizontal scalar velocity of the user equipment (20) related to a current point in time or a current time interval,
the previous motion information being stored in the memory means (52) and indicative of a previous horizontal scalar acceleration value and/or of a previous horizontal scalar velocity of the user equipment (20) related to a previous point in time or a previous time interval,
wherein the previous point in time is prior to the current point in time or wherein the previous time interval is prior to the current time interval,
wherein the user equipment (20) is configured such that a mobility status update information, indicative of the current motion information, is able to be transmitted by the user equipment (20) to the public land mobile network (5),
wherein the user equipment (20) is configured such that the mobility status update information is transmitted to the public land mobile network (5) at least in case of a discrepancy between the current motion information and the previous motion information,
wherein the user equipment (20) is configured such that the mobility status update information is transmitted at least in case of a discrepancy exceeding a predetermined threshold between the current motion information and the previous motion information,
wherein the user equipment is configured to transmit the mobility status update information at least once during a predetermined time interval, such that the mobility status update information is received at least regularly by the public land mobile network from the user equipment.

7. User equipment (20) according to claim 6, wherein the current motion information comprises a current horizontal direction of movement information related to a current point in time or a current time interval, wherein the previous motion information comprises a previous horizontal direction of movement information related to a previous point in time or a previous time interval.

8. User equipment (20) according to claim 6 or 7, wherein the mobility detecting sensor module (51) comprises at least one out of the following:
-- an acceleration sensor and/or
-- a GSPS, Global Satellite Positioning System, receiver and/or
-- signal strength sensor of RF signals of a base transceiver station of the public land mobile network and/or
-- a digital compass and/or
-- a gyroscope and/or
-- a proximity sensor and/or
-- an ambient light sensor.

9. User equipment (20) according to claim 6, 7 or 8 wherein, in view of an optimization of the energy consumption of the user equipment (20), a radio resource management procedure of the user equipment (20) is configured to trigger measurements regarding the radio environment of the user equipment (20), measurement periodicity parameters of such measurements being defined within parameter ranges of the radio resource management procedure of the user equipment (20), wherein the parameter ranges are adapted dependent on the current motion information, wherein the parameter ranges are preferably provided by the public land mobile network (5).

10. Program comprising a computer readable program code which, when executed on a computer or on a user equipment (20), causes the computer or the user equipment (20) to perform a method according one of claims 1 to 5.

11. Computer program product for using a user equipment (20), the computer program product comprising a computer program stored on a storage medium, the computer program comprising program code which, when executed on a computer or on the user equipment (20), causes the computer or the user equipment (20) to perform a method according one of claims 1 to 5.

## Patentansprüche

1. Verfahren zum verbesserten Funkressourcenmanagement in einem öffentlichen terrestrischen Mobilfunknetz (5), das mindestens eine Nutzerausrüstung (20) umfasst,
wobei die Nutzerausrüstung (20) ein Mobilitätsdetektionssensormodul (51) und eine Speichermittel (52) umfasst,
wobei:
das Mobilitätsdetektionssensormodul (51) eine frühere Bewegungsinformation und eine momentane Bewegungsinformation generiert,
die momentane Bewegungsinformation einen momentanen horizontalen skalaren Beschleunigungswert und/oder eine momentane horizontale skalare Geschwindigkeit der Nutzerausrüstung (20) bezüglich eines momentanen Zeitpunktes oder eines momentanen Zeitintervalls anzeigt,
die frühere Bewegungsinformation in dem Speichermittel (52) gespeichert wird und einen früheren horizontalen skalaren Beschleunigungswert und/oder eine frühere horizontale skalare Geschwindigkeit der Nutzerausrüstung (20) bezüglich eines früheren Zeitpunktes oder eines früheren Zeitintervalls anzeigt,
wobei der frühere Zeitpunkt früher als der momentane Zeitpunkt ist, oder wobei das frühere Zeitintervall früher als das momentane Zeitintervall ist,
wobei eine Mobilitätsstatusaktualisierungsinformation, die die momentane Bewegungsinformation anzeigt, durch die Nutzerausrüstung (20) an das öffentliche terrestrische Mobilfunknetz (5) gesendet werden kann,
wobei die Mobilitätsstatusaktualisierungsinformation durch die Nutzerausrüstung (20) an das öffentliche terrestrische Mobilfunknetz (5) mindestens im Fall einer Diskrepanz zwischen der momentanen Bewegungsinformation und der früheren Bewegungsinformation gesendet wird,
wobei die Mobilitätsstatusaktualisierungsinformation mindestens für den Fall gesendet wird, dass eine Diskrepanz eine zuvor festgelegte Schwelle zwischen der momentanen Bewegungsinformation und der früheren Bewegungsinformation überschreitet,
wobei die Mobilitätsstatusaktualisierungsinformation mindestens einmal während eines zuvor festgelegten Zeitintervalls gesendet wird, so dass die Mobilitätsstatusaktualisierungsinformation mindestens regelmäßig durch das öffentliche terrestrische Mobilfunknetz von der Nutzerausrüstung empfangen wird.

2. Verfahren nach dem vorhergehenden Anspruch,
wobei der Nutzerausrüstung (20) durch das öffentliche terrestrische Mobilfunknetz (5) eine Mobilitätsstatusinformation zugewiesen wird, wobei die der Nutzerausrüstung (20) zugewiesene Mobilitätsstatusinformation von mindestens einer Netzwerkauslastungsinformation der Nutzerausrüstung (20) bezüglich eines verstrichenen Zeitintervalls abhängig ist, wobei die Mobilitätsstatusinformation in Abhängigkeit von der von der Nutzerausrüstung (20) empfangenen Mobilitätsstatusaktualisierungsinformation modifiziert wird.

3. Verfahren nach einem der vorhergehenden Ansprüche, wobei die Bewegungsinformation einem von einer Anzahl zuvor festgelegter Bereiche skalarer horizontaler Geschwindigkeiten der Nutzerausrüstung (20) entspricht.

4. Verfahren nach einem der vorhergehenden Ansprüche, wobei die momentane Bewegungsinformation eine momentane horizontale Bewegungsrichtungsinformation bezüglich eines momentanen Zeitpunktes oder eines momentanen Zeitintervalls umfasst, wobei die frühere Bewegungsinformation eine frühere horizontale Bewegungsrichtungsinformation bezüglich eines früheren Zeitpunktes oder eines früheren Zeitintervalls umfasst.

5. Verfahren nach einem der vorhergehenden Ansprüche, wobei, im Hinblick auf eine Optimierung des Energieverbrauchs der Nutzerausrüstung (20), ein Funkressourcenmanagementprocedere der Nutzerausrüstung (20) Messungen bezüglich der Funkumgebung der Nutzerausrüstung (20) auslöst, wobei Messungsperiodizitätsparameter solcher Messungen innerhalb von Parameterbereichen des Funkressourcenmanagementprocederes der Nutzerausrüstung (20) definiert werden, wobei die Parameterbereiche in Abhängigkeit von der momentanen Bewegungsinformation angepasst werden, wobei die Parameterbereiche bevorzugt durch das öffentliche terrestrische Mobilfunknetz (5) bereitgestellt werden.

6. Nutzerausrüstung (20) zum verbesserten Funkressourcenmanagement in einem öffentlichen terrestrischen Mobilfunknetz (5), das mindestens die Nutzerausrüstung (20) umfasst,
wobei die Nutzerausrüstung (20) ein Mobilitätsdetektionssensormodul (51) und ein Speichermittel (52) umfasst,
wobei
das Mobilitätsdetektionssensormodul (51) dafür ausgebildet ist, eine frühere Bewegungsinformation und eine momentane Bewegungsinformation zu generieren,
die momentane Bewegungsinformation einen momentanen horizontalen skalaren Beschleunigungswert und/oder eine momentane horizontale skalare Geschwindigkeit der Nutzerausrüstung (20) bezüglich eines momentanen Zeitpunktes oder eines momentanen Zeitintervalls anzeigt,
die frühere Bewegungsinformation in dem Speichermittel (52) gespeichert wird und einen früheren horizontalen skalaren Beschleunigungswert und/oder eine frühere horizontale skalare Geschwindigkeit der Nutzerausrüstung (20) bezüglich eines früheren Zeitpunktes oder eines früheren Zeitintervalls anzeigt,
wobei der frühere Zeitpunkt früher als der momentane Zeitpunkt ist, oder wobei das frühere Zeitintervall früher als das momentane Zeitintervall ist,
wobei die Nutzerausrüstung (20) so ausgebildet ist, dass eine Mobilitätsstatusaktualisierungsinformation, die die momentane Bewegungsinformation anzeigt, durch die Nutzerausrüstung (20) an das öffentliche terrestrische Mobilfunknetz (5) gesendet werden kann,
wobei die Nutzerausrüstung (20) so ausgebildet ist, dass die Mobilitätsstatusaktualisierungsinformation an das öffentliche terrestrische Mobilfunknetz (5) mindestens im Fall einer Diskrepanz zwischen der momentanen Bewegungsinformation und der früheren Bewegungsinformation gesendet wird,
wobei die Nutzerausrüstung (20) so ausgebildet ist, dass die Mobilitätsstatusaktualisierungsinformation mindestens in dem Fall gesendet wird, dass eine Diskrepanz eine zuvor festgelegte Schwelle zwischen der momentanen Bewegungsinformation und der früheren Bewegungsinformation überschreitet,
wobei die Nutzerausrüstung dafür ausgebildet ist, die Mobilitätsstatusaktualisierungsinformation mindestens einmal während eines zuvor festgelegten Zeitintervalls zu senden, so dass die Mobilitätsstatusaktualisierungsinformation mindestens regelmäßig durch das öffentliche terrestrische Mobilfunknetz von der Nutzerausrüstung empfangen wird.

7. Nutzerausrüstung (20) nach Anspruch 6, wobei die momentane Bewegungsinformation eine momentane horizontale Bewegungsrichtungsinformation bezüglich eines momentanen Zeitpunktes oder eines momentanen Zeitintervalls umfasst, wobei die frühere Bewegungsinformation eine frühere horizontale Bewegungsrichtungsinformation bezüglich eines früheren Zeitpunktes oder eines früheren Zeitintervalls umfasst.

8. Nutzerausrüstung (20) nach Anspruch 6 oder 7, wobei das Mobilitätsdetektionssensormodul (51) mindestens eines von Folgendem umfasst:
- einen Beschleunigungssensor und/oder
- einen GSPS (*Global Satellite Positioning System*)-Empfänger und/oder
- einen Signalstärkesensor von HF-Signalen einer Basistransceiverstation des öffentlichen terrestrischen Mobilfunknetzes und/oder
- einen digitalen Kompass und/oder
- ein Gyroskop und/oder
- einen Nähesensor und/oder
- einen Umgebungslichtsensor.

9. Nutzerausrüstung (20) nach Anspruch 6, 7 oder 8, wobei, im Hinblick auf eine Optimierung des Energieverbrauchs der Nutzerausrüstung (20), ein Funkressourcenmanagementprocedere der Nutzerausrüstung (20) dafür ausgebildet ist, Messungen bezüglich der Funkumgebung der Nutzerausrüstung (20) auszulösen, wobei Messungsperiodizitätsparameter solcher Messungen innerhalb von Parameterbereichen des Funkressourcenmanagementprocederes der Nutzerausrüstung (20) definiert werden, wobei die Parameterbereiche in Abhängigkeit von der momentanen Bewegungsinformation angepasst werden, wobei die Parameterbereiche bevorzugt durch das öffentliche terrestrische Mobilfunknetz (5) bereitgestellt werden.

10. Programm, das einen computerlesbaren Programmcode umfasst, der, wenn er auf einem Computer oder in einer Nutzerausrüstung (20) ausgeführt wird, den Computer oder die Nutzerausrüstung (20) veranlasst, ein Verfahren nach einem der Ansprüche 1 bis 5 auszuführen.

11. Computerprogrammprodukt zur Verwendung einer Nutzerausrüstung (20), wobei das Computerprogrammprodukt ein Computerprogramm umfasst, das auf einem Speichermedium gespeichert ist, wobei das Computerprogramm Programmcode umfasst, der, wenn er auf einem Computer oder in der Nutzerausrüstung (20) ausgeführt wird, den Computer oder die Nutzerausrüstung (20) veranlasst, ein Verfahren nach einem der Ansprüche 1 bis 5 auszuführen.

## Revendications

1. Procédé de gestion améliorée de ressources radioélectriques dans un réseau mobile terrestre public (5) comprenant au moins un équipement d'utilisateur (20),
dans lequel l'équipement d'utilisateur (20) comprend un module capteur de détection de mobilité (51) et un moyen formant mémoire (52),
dans lequel le module capteur de détection de mobilité (51) produit des informations de déplacement précédent et des informations de déplacement actuel,
les informations de déplacement actuel indiquant une valeur d'accélération scalaire horizontale actuelle et/ou une vitesse scalaire horizontale actuelle de l'équipement d'utilisateur (20) par rapport à un instant actuel ou à un intervalle de temps actuel,
les informations de déplacement précédent étant stockées dans le moyen formant mémoire (52) et indiquant une valeur d'accélération scalaire horizontale précédente et/ou une vitesse scalaire horizontale précédente de l'équipement d'utilisateur (20) par rapport à un instant précédent ou à un intervalle de temps précédent,
dans lequel l'instant précédent est antérieur à l'instant actuel ou dans lequel l'intervalle de temps précédent est antérieur à l'intervalle de temps actuel,
dans lequel des informations de mise à jour d'état de mobilité, indiquant les informations de déplacement actuel, sont aptes à être transmises par l'équipement d'utilisateur (20) au réseau mobile terrestre public (5), dans lequel les informations de mise à jour d'état de mobilité sont transmises par l'équipement d'utilisateur (20) au réseau mobile terrestre public (5) au moins dans le cas d'un écart entre les informations de déplacement actuel et les informations de déplacement précédent,
dans lequel les informations de mise à jour d'état de mobilité sont transmises au moins dans le cas d'un écart dépassant un seuil prédéterminé entre les informations de déplacement actuel et les informations de déplacement précédent,
dans lequel les informations de mise à jour d'état de mobilité sont transmises au moins une fois au cours d'un intervalle de temps prédéterminé, de manière que les informations de mise à jour d'état de mobilité soient reçues au moins régulièrement par le réseau mobile terrestre public en provenance de l'équipement d'utilisateur.

2. Procédé selon la revendication précédente, dans lequel des informations d'état de mobilité sont attribuées, par le réseau mobile terrestre public (5), à l'équipement d'utilisateur (20), dans lequel les informations d'état de mobilité attribuées à l'équipement d'utilisateur (20) sont fonction d'au moins une information d'utilisation de réseau de l'équipement d'utilisateur (20) par rapport à un intervalle de temps écoulé,
dans lequel les informations d'état de mobilité sont modifiées en fonction des informations de mise à jour d'état de mobilité reçues en provenance de l'équipement d'utilisateur (20).

3. Procédé selon l'une des revendications précédentes, dans lequel les informations de déplacement correspondent à une plage parmi un certain nombre de plages prédéterminées de vitesses scalaires horizontales de l'équipement d'utilisateur (20).

4. Procédé selon l'une des revendications précédentes, dans lequel les informations de déplacement actuel comprennent une information de sens de mouvement horizontal actuel par rapport à un instant actuel ou à un intervalle de temps actuel, dans lequel les informations de déplacement précédent comprennent une information de sens de mouvement horizontal précédent par rapport à un instant précédent ou à un intervalle de temps précédent.

5. Procédé selon l'une des revendications précédentes, dans lequel, en vue d'une optimisation de la consommation d'énergie de l'équipement d'utilisateur (20), une procédure de gestion de ressources radioélectriques de l'équipement d'utilisateur (20) déclenche des mesures concernant l'environnement radioélectrique de l'équipement d'utilisateur (20), des paramètres de périodicité de mesure de telles mesures étant définis à l'intérieur de plages de paramètres de la procédure de gestion de ressources radioélectriques de l'équipement d'utilisateur (20), dans lequel les plages de paramètres sont adaptées en fonction des informations de déplacement actuel, dans lequel les plages de paramètres sont de préférence fournies par le réseau mobile terrestre public (5).

6. Équipement d'utilisateur (20) permettant une gestion améliorée de ressources radioélectriques dans un réseau mobile terrestre public (5) comprenant au moins l'équipement d'utilisateur (20),
dans lequel l'équipement d'utilisateur (20) comprend un module capteur de détection de mobilité (51) et un moyen formant mémoire (52),
dans lequel le module capteur de détection de mobilité (51) est conçu pour produire des informations de déplacement précédent et des informations de déplacement actuel,
les informations de déplacement actuel indiquant une valeur d'accélération scalaire horizontale actuelle et/ou une vitesse scalaire horizontale actuelle de l'équipement d'utilisateur (20) par rapport à un instant actuel ou à un intervalle de temps actuel,
les informations de déplacement précédent étant stockées dans le moyen formant mémoire (52) et indiquant une valeur d'accélération scalaire horizontale précédente et/ou une vitesse scalaire horizontale précédente de l'équipement d'utilisateur (20) par rapport à un instant précédent ou à un intervalle de temps précédent,
dans lequel l'instant précédent est antérieur à l'instant actuel ou dans lequel l'intervalle de temps précédent est antérieur à l'intervalle de temps actuel,
dans lequel l'équipement d'utilisateur (20) est conçu de manière que des informations de mise à jour d'état de mobilité, indiquant les informations de déplacement actuel, soient aptes à être transmises par l'équipement d'utilisateur (20) au réseau mobile terrestre public (5), dans lequel l'équipement d'utilisateur (20) est conçu de manière que les informations de mise à jour d'état de mobilité soient transmises au réseau mobile terrestre public (5) au moins dans le cas d'un écart entre les informations de déplacement actuel et les informations de déplacement précédent,
dans lequel l'équipement d'utilisateur (20) est conçu de manière que les informations de mise à jour d'état de mobilité soient transmises au moins dans le cas d'un écart dépassant un seuil prédéterminé entre les informations de déplacement actuel et les informations de déplacement précédent,
dans lequel l'équipement d'utilisateur est conçu pour transmettre les informations de mise à jour d'état de mobilité au moins une fois au cours d'un intervalle de temps prédéterminé, de manière que les informations de mise à jour d'état de mobilité soient reçues au moins régulièrement par le réseau mobile terrestre public en provenance de l'équipement d'utilisateur.

7. Équipement d'utilisateur (20) selon la revendication 6, dans lequel les informations de déplacement actuel comprennent une information de sens de mouvement horizontal actuel par rapport à un instant actuel ou à un intervalle de temps actuel, dans lequel les informations de déplacement précédent comprennent une information de sens de mouvement horizontal précédent par rapport à un instant précédent ou à un intervalle de temps précédent.

8. Équipement d'utilisateur (20) selon la revendication 6 ou 7, dans lequel le module capteur de détection de mobilité (51) comprend au moins un élément parmi :
- un capteur d'accélération et/ou
- un récepteur GSPS (*global satellite positioning system*, système mondial de localisation par satellite) et/ou
- un capteur de force de signaux radioélectriques d'une station d'émission-réception de base du réseau mobile terrestre public et/ou
- un compas numérique et/ou
- un gyroscope et/ou
- un capteur de proximité et/ou
- un capteur de lumière ambiante.

9. Équipement d'utilisateur (20) selon la revendication 6, 7 ou 8 dans lequel, en vue d'une optimisation de la consommation d'énergie de l'équipement d'utilisateur (20), une procédure de gestion de ressources radioélectriques de l'équipement d'utilisateur (20) est conçue pour déclencher des mesures concernant l'environnement radioélectrique de l'équipement d'utilisateur (20), des paramètres de périodicité de mesure de telles mesures étant définis à l'intérieur de plages de paramètres de la procédure de gestion de ressources radioélectriques de l'équipement d'utilisateur (20), dans lequel les plages de paramètres sont adaptées en fonction des informations de déplacement actuel, dans lequel les plages de paramètres sont de préférence fournies par le réseau mobile terrestre public (5).

10. Programme comprenant un code de programme lisible par ordinateur, qui, lorsqu'il est exécuté sur un ordinateur ou sur un équipement d'utilisateur (20) fait mettre en oeuvre à l'ordinateur ou à l'équipement d'utilisateur (20) un procédé selon l'une des revendications 1 à 5.

11. Produit-programme informatique destiné à utiliser un équipement d'utilisateur (20), le produit-programme informatique comprenant un programme informatique stocké sur un support de stockage, le programme informatique comprenant un code de programme qui, lorsqu'il est exécuté sur un ordinateur ou sur l'équipement d'utilisateur (20) fait mettre en oeuvre à l'ordinateur ou à l'équipement d'utilisateur (20) un procédé selon l'une des revendications 1 à 5.
